# EUROPÄISCHE PATENTSCHRIFT

(11) **EP 3 213 315 B1**
(45) Veröffentlichungstag und Bekanntmachung des Hinweises auf die Patenterteilung: **14.04.2021**
(21) Anmeldenummer: 15774897.1
(22) Anmeldetag: 29.09.2015
(51) Int. Cl.: G08G 1/14, G05D 1/02, G01C 21/34, G01C 21/36, G08G 1/16

(54) **VERFAHREN UND VORRICHTUNG ZUM BETREIBEN EINES PARKPLATZES**
METHOD AND DEVICE FOR OPERATING A PARKING SPACE
PROCÉDÉ ET DISPOSITIF DE FONCTIONNEMENT D'UNE PLACE DE STATIONNEMENT

(30) Priorität: 27.10.2014 DE 102014221771
(43) Veröffentlichungstag der Anmeldung: 06.09.2017
(73) Patentinhaber: Robert Bosch GmbH, 70442 Stuttgart (DE)
(72) Erfinder: NICODEMUS, Rolf, 74321 Bietigheim-Bissingen (DE); NORDBRUCH, Stefan, 70806 Kornwestheim (DE); HOFFMANN, Stefan, 74321 Bietigheim (DE)
(86) Internationale Anmeldenummer: PCT/EP2015/072338
(87) Internationale Veröffentlichungsnummer: WO 2016/066354

(56) Entgegenhaltungen:
- EP-A2- 2 695 797
- DE-A1-102009 029 720
- DE-A1-102012 021 282
- DE-A1-102012 222 562
- IBISCH ANDRE ET AL: "Towards highly automated driving in a parking garage: General object localization and tracking using an environment-embedded camera system", 2014 IEEE INTELLIGENT VEHICLES SYMPOSIUM PROCEEDINGS, IEEE, 8. Juni 2014 (2014-06-08), Seiten 426-431, XP032620322, DOI: 10.1109/IVS.2014.6856567 [gefunden am 2014-07-15]

## Beschreibung

Die Erfindung betrifft ein Verfahren zum Betreiben eines Parkplatzes sowie eine Vorrichtung zum Betreiben eines Parkplatzes. Die Erfindung betrifft ferner ein Parksystem und ein Computerprogramm.

### Stand der Technik

Die Offenlegungsschrift DE 10 2012 021 282 A1 zeigt ein Verfahren zur Koordination des Betriebs von vollautomatisiert fahrenden Kraftfahrzeugen.

Die Offenlegungsschrift DE 10 2012 222 562 A1 zeigt ein System für bewirtschaftete Parkflächen zur Überführung eines Fahrzeugs von einer Startposition in eine Zielposition.

Die Offenlegungsschrift EP 2 695 797 A2 zeigt ein Verfahren zum fahrerlosen Bewegen eines Fahrzeugs auf einer Parkfläche.

Bei einem vollautomatisierten (autonomen) sogenannten Valet Parking wird ein Fahrzeug von seinem Fahrer auf einer Abgabestelle, zum Beispiel vor einem Parkhaus geparkt und von da fährt das Fahrzeug selber in eine Parkposition / Parkbucht und wieder zurück zur Abgabestelle.

Die Offenlegungsschrift KR 102012031778 A zeigt, dass ein Parkplatz mittels einer Videokamera auf Vorhandensein von Verkehr überwacht wird. Bei Detektion von Verkehr, wird ein entsprechendes Signal generiert. Abhängig von dem Signal werden Alarm-Maßnahmen ergriffen.

Es besteht ein Bedarf, eine Gefährdung von Fahrzeugen und/oder von Menschen bei einem autonomen Valet Parking Vorgang zu reduzieren.

### Offenbarung der Erfindung

Die der Erfindung zugrunde liegende Aufgabe kann daher darin gesehen werden, ein Verfahren zum Betreiben eines Parkplatzes bereitzustellen, wobei eine Gefährdung von Fahrzeugen und/oder von Menschen bei einem autonomen Valet-Parking-Vorgang reduziert werden kann.

Die der Erfindung zugrunde liegende Aufgabe kann auch darin gesehen werden, eine entsprechende Vorrichtung zum Betreiben eines Parkplatzes anzugeben.

Des Weiteren kann die der Erfindung zugrunde liegende Aufgabe auch darin gesehen werden, ein entsprechendes Parksystem bereitzustellen.

Die der Erfindung zugrunde liegende Aufgabe kann ferner darin gesehen werden, ein entsprechendes Computerprogramm anzugeben.

Diese Aufgaben werden mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt wird ein Verfahren zum Betreiben eines Parkplatzes bereitgestellt,
- wobei eine Route zu einer Zielposition innerhalb des Parkplatzes für eine autonome Fahrt eines Fahrzeugs auf dem Parkplatz zu der Zielposition ermittelt wird und
- wobei zumindest ein Teilstück der Route für weitere Fahrzeuge gesperrt wird, bevor das Fahrzeug das Teilstück durchfährt, so dass das Fahrzeug autonom durch das gesperrte Teilstück der Route fahren kann.

Nach noch einem Aspekt wird eine Vorrichtung zum Betreiben eines Parkplatzes bereitgestellt, umfassend:
-eine Steuerungseinrichtung zum Steuern eines Absperrvorgangs von zumindest einem Teilstück einer ermittelten Route zu einer Zielposition innerhalb des Parkplatzes für ein autonom fahrendes Fahrzeug, bevor das Fahrzeug das Teilstück durchfährt, so dass das Fahrzeug autonom durch das gesperrte Teilstück der Route fahren kann.

Nach einer Ausführungsform umfasst die Vorrichtung ferner:
- einen Prozessor, der ausgebildet ist, die Route zu der Zielposition innerhalb des Parkplatzes (303, 401) zu ermitteln, und
- eine Kommunikationsschnittstelle, die ausgebildet ist, die Route über ein Kommunikationsnetzwerk an das Fahrzeug für eine autonome Fahrt auf dem Parkplatz zu der Zielposition zu senden.

Nach einer Ausführungsform umfasst die Vorrichtung ferner eine Kommunikationsschnittstelle, die ausgebildet ist, die ermittelte Route über das Kommunikationsnetzwerk zu empfangen.

Nach einem Aspekt wird also eine Vorrichtung zum Betreiben eines Parkplatzes bereitgestellt, umfassend:
- einen Prozessor, der ausgebildet ist, eine Route zu einer Zielposition innerhalb des Parkplatzes zu ermitteln,
- eine Kommunikationsschnittstelle, die ausgebildet ist, die Route über ein Kommunikationsnetzwerk an ein Fahrzeug für eine autonome Fahrt auf dem Parkplatz zu der Zielposition zu senden,
- eine Steuerungseinrichtung zum Steuern eines Absperrvorgangs von zumindest einem Teilstück der Route, bevor das Fahrzeug das Teilstück durchfährt, so dass das Fahrzeug autonom durch das gesperrte Teilstück der Route fahren kann.

Nach einem Aspekt wird also eine Vorrichtung zum Betreiben eines Parkplatzes bereitgestellt, umfassend:
- eine Kommunikationsschnittstelle, die ausgebildet ist, über ein Kommunikationsnetzwerk eine ermittelte Route für eine autonome Fahrt eines Fahrzeugs auf dem Parkplatz zu der Zielposition zu empfangen (insbesondere von einem Fahrzeug zu empfangen) und
- eine Steuerungseinrichtung zum Steuern eines Absperrvorgangs von zumindest einem Teilstück der Route, bevor das Fahrzeug das Teilstück durchfährt, so dass das Fahrzeug autonom durch das gesperrte Teilstück der Route fahren kann

Nach einer Ausführungsform ist eine Kombination der beiden vorstehend genannten Vorrichtungen vorgesehen, das heißt, dass die Kommunikationsschnittstelle entsprechend ausgebildet, eine ermittelte Route zu empfangen und eine ermittelte Route zu übermitteln, dies über ein Kommunikationsnetzwerk.

Nach noch einem Aspekt wird ein Parksystem bereitgestellt, welches einen Parkplatz und die erfindungsgemäße Vorrichtung umfasst.

Gemäß einem weiteren Aspekt wird ein Computerprogramm bereitgestellt, welches Programmcode zur Durchführung des erfindungsgemäßen Verfahrens umfasst, wenn das Computerprogramm auf einem Computer ausgeführt wird.

Die Erfindung umfasst also insbesondere den Gedanken, zumindest ein Teilstück (vorzugsweise die gesamte Route) der Route für weitere Fahrzeuge zu sperren, sodass das Fahrzeug durch das abgesperrte Teilstück der Route autonom fahren kann. Dadurch wird insbesondere der technische Vorteil bewirkt, dass eine Gefährdung für weitere Fahrzeuge und/oder für Menschen reduziert oder ausgeschlossen werden kann. Insbesondere ist dadurch in vorteilhafter Weise bewirkt, dass ein Kollisionsrisiko verringert oder ausgeschlossen werden kann. Ferner ist es so in vorteilhafter Weise ermöglicht, dass sowohl autonom fahrende Fahrzeuge als auch nicht autonom fahrende Fahrzeuge, also Fahrzeuge, die noch von einem Fahrer gesteuert werden müssen, auf dem Parkplatz fahren können. Es ist also ein Mischbetrieb von autonom fahrenden Fahrzeugen und nicht autonom fahrenden Fahrzeugen ermöglicht. Dies deshalb, da zumindest ein Teilstück der Route, durch welche das autonom fahrende Fahrzeug fahren soll, für weitere Fahrzeuge, also auch für nicht autonom fahrende Fahrzeuge, gesperrt ist. Es kann somit in vorteilhafter Weise nicht zu Situationen kommen, die hinsichtlich einer Vorfahrt gegebenenfalls unklar sind. Solche Situationen werden zwischen Menschen oft über Handzeichen geregelt. Dies ist bei einem autonom fahrenden Fahrzeug in der Regel nicht möglich. Indem also solche Situationen aufgrund der Absperrung vermieden werden können, können somit die daraus eventuell resultierenden Probleme vermieden werden. Insbesondere kann eine Kollisionsgefahr verringert werden.

Nach einer Ausführungsform wird die Route über ein Kommunikationsnetzwerk an das Fahrzeug für eine autonome Fahrt auf dem Parkplatz zu der Zielposition übermittelt. Hier wird die Route also fahrzeugextern ermittelt, zum Beispiel mittels der erfindungsgemäßen Vorrichtung zum Betreiben eines Parkplatzes

Nach einer anderen Ausführungsform wird die Route fahrzeugintern im Fahrzeug ermittelt wird und über ein Kommunikationsnetzwerk an einen Teilnehmer des Kommunikationsnetzwerks übermittelt. Der Teilnehmer ist vorzugsweise die erfindungsgemäße Vorrichtung zum Betreiben eines Parkplatzes. So kann dann der Teilnehmer, insbesondere die Vorrichtung, das Teilstück absperren.

Wenn im Lichte dieser Beschreibung Ausführungsformen beschrieben werden, in denen die Route über das Kommunikationsnetzwerk an das Fahrzeug übermittelt wird, so soll stets der Fall mitgelesen werden, dass die Route fahrzeugintern ermittelt wird und über ein Kommunikationsnetzwerk an einen Teilnehmer des Kommunikationsnetzwerks übermittelt wird.

Für das fahrzeuginterne Ermittelt ist insbesondere vorgesehen, dass dem Fahrzeug eine digitale Karte (Parkplatzkarte) über das Kommunikationsnetzwerk übermittelt wird, beispielsweise mittels der Vorrichtung.

Nach einer Ausführungsform ist vorgesehen, dass die Route komplett gesperrt wird, während das Fahrzeug die Route abfährt. Das heißt also insbesondere, dass auch Teilstücke der Route abgesperrt sind, die vom Fahrzeug noch nicht oder bereits durchfahren worden sind. Dadurch ist in vorteilhafter Weise eine einfache und effiziente Durchführung des Verfahrens gegeben, insofern nur eine einzige Komplettsperrung der Route notwendig ist, ohne dass berücksichtigt werden muss, ob gegebenenfalls noch Teilstücke, die vom Fahrzeug noch nicht oder bereits durchfahren worden sind, nicht doch noch für weitere Fahrzeuge wieder freigegeben werden sollten. Dies vereinfacht in vorteilhafter Weise die Durchführung des Verfahrens.

Nach einer anderen Ausführungsform ist vorgegeben, dass das gesperrte Teilstück, nachdem das Fahrzeug dieses durchfahren hat, wieder freigegeben wird. Das heißt also, dass die Sperrung oder die Absperrung aufgehoben wird. Das heißt also, dass durch das freigegebene Teilstück wieder weitere Fahrzeuge und/oder Menschen durchfahren respektive durchlaufen können. Dadurch wird in vorteilhafter Weise eine effiziente Verkehrsführung oder Verkehrssteuerung auf dem Parkplatz bewirkt.

Nach einer Ausführungsform werden mehrere Teilstücke der Route gesperrt, bevor das Fahrzeug diese jeweils durchfährt, sodass das Fahrzeug autonom durch das jeweilige gesperrte Teilstück der Route fahren kann. So kann es Situationen geben, in denen es sinnvoll ist, nur einige Teilstücke, nicht also die gesamte Route, für weitere Fahrzeuge zu sperren.

Nach einer Ausführungsform wird die gesamte Route auf einmal oder sukzessive gesperrt.

In einer anderen Ausführungsform ist vorgesehen, dass Teilstücke der Route sukzessive für das Fahrzeug während seines Abfahrens der Route gesperrt werden und nach entsprechender Durchfahrt wieder freigegeben werden. Das heißt also insbesondere, dass, wenn sich das Fahrzeug in einer ersten Etage eines Parkhauses befindet und zu der vierten Etage autonom fahren wird, Teilstücke der abzufahrenden Route in der zweiten und dritten Etage noch nicht gesperrt werden müssen. Diese können also frei für weiteren Verkehr bleiben. Somit kann in vorteilhafter Weise ein Verkehrsfluss auf dem Parkplatz optimiert werden.

Nach einer anderen Ausführungsform ist vorgesehen, dass das Absperren ein Steuern eines oder mehrerer Signalgeber und/oder ein Steuern einer Schranke umfasst. Ein Signalgeber sendet beispielsweise für ein Absperren ein rotes Signallicht aus. Das Freigeben umfasst ein Steuern des Signalgebers derart, dass dieser ein grünes Signallicht aussendet. Ein Steuern einer Schranke, um das Teilstück abzusperren, umfasst insbesondere ein Schließen der Schranke. Ein Freigeben des abgesperrten Teilstücks umfasst insbesondere ein Steuern der Schranke derart, dass diese geöffnet wird.

Das heißt also, dass als mögliche Absperrmaßnahmen ein Steuern eines oder mehrerer Signalgeber und/oder ein Steuern einer Schranke vorgesehen sind. Das heißt also, dass zum Absperren ein oder mehrere Signalgeber rotes Signallicht aussenden. Zum Absperren ist insbesondere vorgesehen, dass eine Schranke geschlossen wird. Zum Freigeben des Teilstücks ist insbesondere vorgesehen, dass die geschlossene Schranke geöffnet wird. Insbesondere ist zum Freigeben des abgesperrten Teilstücks vorgesehen, dass der oder die mehreren Signalgeber grünes Signallicht aussenden.

Der oder die Signalgeber und/oder die Schranke sind also insbesondere Teil einer Infrastruktur des Parkplatzes, wobei der oder die Signalgeber und/oder die Schranke insbesondere Strecken absperren oder freigeben können, die die Route, also hier insbesondere das Teilstück, kreuzt oder in diese einmündet. Dadurch wird also in vorteilhafter Weise bewirkt, dass ein Verkehr, welcher auf diesen Strecken in Richtung des Teilstücks oder der Route fährt, zum Stoppen oder Anhalten veranlasst wird. Der Verkehr muss also warten.

Nach einer Ausführungsform sind mehrere Schranken vorgesehen.

Nach einer Ausführungsform ist vorgesehen, dass ein Startsignal für das Durchfahren des Teilstücks aktiviert oder freigegeben wird, nachdem das Teilstück für weitere Fahrzeuge gesperrt ist. Dadurch wird in vorteilhafter Weise bewirkt, dass das Fahrzeug Kenntnis darüber hat, dass das Teilstück gesperrt ist und es nun durch das gesperrte Teilstück autonom fahren kann.

Das Startsignal ist nach einer Ausführungsform ein Signallicht, insbesondere ein grünes Signallicht, eines Signalgebers. Das heißt also, dass das Aktivieren des Startsignals bedeutet, dass der Signalgeber ein grünes Signallicht aussendet. Ein Startsignal kann insbesondere auch umfassen, dass eine Schranke geöffnet wird. Das heißt also, dass das Aktivieren des Startsignals umfasst, dass eine Schranke geöffnet wird.

In einer anderen Ausführungsform ist vorgesehen, dass das Startsignal an das Fahrzeug gesendet wird, vorzugsweise über das Kommunikationsnetzwerk. Das heißt also, dass unabhängig von einem Signalgeber und/oder einer Schranke, das Fahrzeug Kenntnis darüber erlangt, dass das Teilstück gesperrt ist, sodass das Fahrzeug nun autonom durch das gesperrte Teilstück der Route fahren kann. Somit ist eine Unabhängigkeit von einer Infrastruktur wie zum Beispiel einer Schranke oder eines Signalgebers gegeben.

In einer anderen Ausführungsform sind Kombinationen der vorstehend genannten Ausführungsformen bezüglich des Startsignals vorgesehen. Das heißt also, dass sowohl ein Signalgeber und/oder eine Schranke und/oder ein Senden eines Startsignals über das Kommunikationsnetzwerk vorgesehen sind, um dem Fahrzeug zu signalisieren, dass das Teilstück gesperrt ist.

In einer anderen Ausführungsform ist vorgesehen, dass überprüft wird, ob das Teilstück frei ist, wobei ein Startsignal für das Durchfahren des Teilstücks nur dann aktiviert wird, wenn das Überprüfen ergeben hat, dass das Teilstück frei ist. Dadurch wird insbesondere der technische Vorteil bewirkt, dass sichergestellt ist, dass das Fahrzeug nur dann das Teilstück durchfährt, wenn sich kein weiteres Fahrzeug und/oder Menschen in diesem Teilstück aufhalten oder befinden. Somit kann eine Gefährdung für weitere Fahrzeuge oder Menschen noch weiter reduziert werden. Insbesondere wird dadurch in vorteilhafter Weise ein Kollisionsrisiko verringert oder sogar ganz vermieden.

Nach einer Ausführungsform ist ein Überwachungssystem vorgesehen. Das Überwachungssystem umfasst insbesondere eine oder mehrere Videokameras, die auch als Überwachungskameras bezeichnet werden können. Mittels des Überwachungssystems ist nach einer Ausführungsform eine Überwachung der autonomen Fahrt des Fahrzeugs auf dem Parkplatz vorgesehen, das heißt also, dass nach einer Ausführungsform die autonome Fahrt des Fahrzeugs auf dem Parkplatz mittels des Überwachungssystems überwacht wird. Insbesondere ist das Überwachungssystem vorgesehen, zu überprüfen, ob das Teilstück der Route frei ist oder nicht.

Nach einer Ausführungsform ist vorgesehen, dass das Teilstück für Menschen gesperrt wird. Dadurch wird in vorteilhafter Weise eine Gefährdung für Menschen noch weiter vermieden, insofern diese nun direkt angesprochen werden, dass sie das Teilstück nicht betreten dürfen. Das Absperren speziell für Menschen umfasst insbesondere das Steuern von einem oder mehreren Signalgebern und/oder einer oder mehrerer Schranken, die speziell für Menschen vorgesehen sind, zum Beispiel ein Fußgängersignalgeber. Ein solcher Signalgeber umfasst beispielsweise eine Maske in Form eines Piktogramms eines Menschen.

In einer anderen Ausführungsform ist vorgesehen, dass das autonom fahrende Fahrzeug und/oder ein weiteres autonom fahrendes Fahrzeug (oder Fahrzeuge) gestoppt wird respektive werden, wenn während der Überwachung ein für die autonome Fahrt (von dem Fahrzeug und/oder von zumindest einem der weiteren Fahrzeuge) relevantes Problem detektiert wird. Dadurch wird in vorteilhafter Weise vermieden, dass aufgrund des detektierten Problems eine Gefährdung für das Fahrzeug oder für weitere Fahrzeuge oder für Menschen erhöht wird. Denn ein gestopptes Fahrzeug stellt in der Regel eine kleinere Gefährdung dar als ein autonom fahrendes Fahrzeug. Das Stoppen des Fahrzeugs oder der Fahrzeuge umfasst insbesondere ein Senden eines Stoppsignals über das Kommunikationsnetzwerk an das Fahrzeug. Ansprechend auf das Stoppsignal stoppt das autonom fahrende Fahrzeug nach einer Ausführungsform. Das Stoppen des Fahrzeugs umfasst insbesondere ein Steuern von einem oder mehreren Signalgebern und/oder ein Steuern von einer oder mehreren Schranken wie vorstehend bereits erläutert, also indem der oder die Signalgeber rotes Signallicht aussenden respektive die Schranke geschlossen werden.

Ein für die autonome Fahrt relevantes Problem liegt beispielsweise vor, wenn sich auf der Route oder auf dem Teilstück ein Hindernis für das autonom fahrende Fahrzeug befindet.

Probleme im Sinne der vorliegenden Erfindung sind zum Beispiel:
- Fussgänger
- Ausparkende Fahrzeuge (gerade, wenn es "manuelle" Fahrzeuge sind)
- Noch nicht abgeschlossene Einparkvorgänge
- Kritische Stellen bezüglich Fahrmanöver (zum Beispiel enge Stellen)

In einer anderen Ausführungsform ist vorgesehen, dass die autonome Fahrt des Fahrzeugs auf dem Parkplatz optisch aufgezeichnet wird. Insbesondere wird das Überwachungssystem für das optische Aufzeichnen der autonomen Fahrt verwendet. Das optische Aufzeichnen der autonomen Fahrt des Fahrzeugs auf dem Parkplatz weist insbesondere den Vorteil auf, dass auch zu einem späteren Zeitpunkt die autonome Fahrt nachvollzogen und analysiert werden kann. Dies ist insbesondere für eventuelle Beweiszwecke vorteilhaft und sinnvoll.

Eine Zielposition im Sinne der vorliegenden Erfindung ist insbesondere eine Parkposition, an welcher das Fahrzeug autonom parken soll. Eine Zielposition im Sinne der vorliegenden Erfindung ist insbesondere eine Abgabeposition, an welcher ein Fahrer eines Fahrzeugs sein Fahrzeug abstellen kann, wobei diese Abgabeposition eine Startposition für einen autonomen Parkvorgang ist. Das heißt also, dass bei dem autonomen Parkvorgang des Fahrzeug autonom von der Abgabeposition zu der Parkposition fährt, dies insbesondere, wenn es die Route abfährt. Insbesondere fährt das Fahrzeug autonom von der Parkposition zurück zu der Abgabeposition. Das heißt also insbesondere, dass ein Teilstück der Route von der Abgabeposition zu der Parkposition oder umgekehrt abgesperrt wird, bevor das Fahrzeug das Teilstück durchfährt.

Ausführungsformen der Vorrichtung und des Parksystems ergeben sich in analoger Weise aus den Ausführungsformen in Bezug auf das Verfahren und umgekehrt. Entsprechend gemachte Ausführungen im Zusammenhang mit dem Verfahren gelten analog für die Vorrichtung und das Parksystem und umgekehrt.

Ein Parkplatzmanagementsystem koordiniert beispielsweise eine Vergabe der Parkpositionen.

Ein Parkplatz im Sinne der vorliegenden Erfindung kann auch als eine Parkfläche bezeichnet werden und dient als Abstellfläche für Fahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz kann nach einer Ausführungsform von einem Parkhaus umfasst sein. Insbesondere ist der Parkplatz von einer Garage umfasst.

Autonom im Sinne der vorliegenden Erfindung bedeutet insbesondere, dass das Fahrzeug selbstständig, also ohne einen Eingriff eines Fahrers, navigiert. Das Fahrzeug fährt also selbstständig auf dem Parkplatz, ohne dass ein Fahrer hierfür das Fahrzeug steuern müsste. Der Fahrer muss sich also nicht im Fahrzeug befinden. Ein solch autonomes fahrendes Fahrzeug, das automatisch ein- und ausparken kann, wird beispielsweise als ein AVP-Fahrzeug bezeichnet. AVP steht für "automatic valet parking" und kann mit "automatischer Parkvorgang" übersetzt werden. Fahrzeuge, die diese AVP-Funktionalität nicht aufweisen, werden beispielsweise als normale Fahrzeuge bezeichnet.

Nach einer Ausführungsform umfasst das Kommunikationsnetzwerk ein WLAN-Netzwerk und/oder ein Mobilfunknetzwerk.

Eine Abgabeposition im Sinne der vorliegenden Erfindung, ist eine Position, an welcher ein Fahrer des Fahrzeugs sein Fahrzeug für einen autonomen Parkvorgang abstellen kann und von dieser sein Fahrzeug zu einem späteren Zeitpunkt wieder abholen kann.

Eine Parkposition im Sinne der vorliegenden Erfindung ist eine Position, an welcher das Fahrzeug autonom parken soll.

In einer Ausführungsform ist vorgesehen, dass das Fahrzeug autonom von der Abgabeposition zu der Parkposition navigiert.

In einer weiteren Ausführungsform ist vorgesehen, dass das Fahrzeug autonom in die Parkposition einparkt.

In einer anderen Ausführungsform ist vorgesehen, dass das Fahrzeug autonom aus der Parkposition ausparkt.

Nach einer weiteren Ausführungsform ist vorgesehen, dass das Fahrzeug autonom von der Parkposition zu der Abgabeposition navigiert.

Entsprechende Teilstücke der Route, die das Fahrzeug während seiner autonomen Fahrt (zum Beispiel von der Abgabeposition zu der Parkposition oder von der Parkposition zu der Abgabeposition) nimmt, werden also nach einer Ausführungsform gesperrt.

Nach einer Ausführungsform führt die Route von der Abgabeposition zu der Parkposition.

Nach einer Ausführungsform führt die Route von der Parkposition zu der Abgabeposition.

Nach einer Ausführungsform führt die Route von der Abgabeposition zu der Parkposition und wieder von der Parkposition zurück zu der Abgabeposition.

Die Route umfasst also nach einer Ausführungsform eine Startposition (Abgabeposition oder Parkposition) und eine Zielposition (Abgabeposition oder Parkposition), wobei die Startposition und die Zielposition beispielsweise vom Parkplatz umfasst sind.

Nach einer Ausführungsform ist die Kommunikationsschnittstelle ausgebildet, bei einem Problem während der autonomen Fahrt das autonom fahrende Fahrzeug (zum Beispiel ein AVP-Fahrzeug) und/oder weitere autonom fahrende Fahrzeuge (zum Beispiel (weitere AVP-Fahrzeuge) zu stoppen. Die Kommunikationsschnittstelle übermittelt an die Fahrzeuge Stoppsignale und/oder steuert Signalgeber (Singular soll mitgelesen werden), dass diese rotes Signallicht aussenden, und/oder steuert Schranken (Singular soll mitgelesen werden), dass sich diese schließen. Zu Detektieren eines Problems ist nach einer Ausführungsform ein Überwachungssystem, umfassend beispielsweise eine oder mehrere Videokameras, vorgesehen. Der Prozessor wertet zum Beispiel die Daten vom Überwachungssystem, zum Beispiel die Videobilder der Videokameras, aus und generiert die Stoppsignale.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Parkplatzes,
- Fig. 2: eine Vorrichtung zum Betreiben eines Parkplatzes,
- Fig. 3: ein Parksystem und
- Fig. 4: einen Parkplatz.

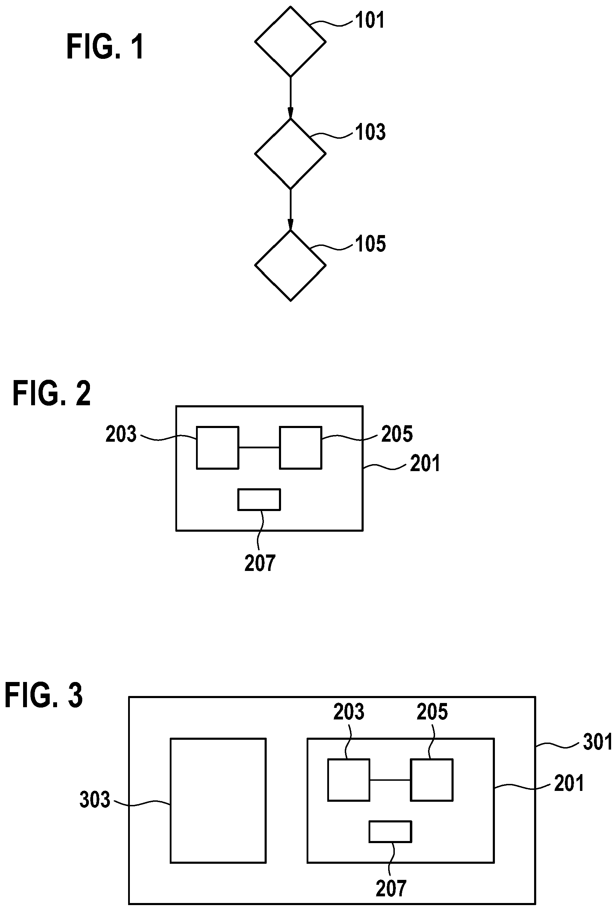

Fig. 1 zeigt ein Ablaufdiagramm eines Verfahrens zum Betreiben eines Parkplatzes.

Gemäß einem Schritt 101 wird eine Route zu einer Zielposition innerhalb des Parkplatzes ermittelt. Die Zielposition ist beispielsweise eine Parkposition oder eine Abgabeposition.

In einem Schritt 103 wird die Route über ein Kommunikationsnetzwerk an ein Fahrzeug für eine autonome Fahrt auf dem Parkplatz zu der Zielposition übermittelt. Das Fahrzeug ist vorzugsweise ein AVP-Fahrzeug. Die Route kann alternativ auch fahrzeugintern ermittelt werden und über das Kommunikationsnetzwerk an einen Teilnehmer des Kommunikationsnetzwerks übermittelt werden.

In einem Schritt 105 wird zumindest ein Teilstück, vorzugsweise mehrere Teilstücke, der Route (vorzugsweis die gesamte Route) für weitere Fahrzeuge gesperrt, bevor das Fahrzeug das Teilstück durchfährt, sodass das Fahrzeug autonom durch das gesperrte Teilstück der Route fahren kann.

In einer nicht gezeigten Ausführungsform ist vorgesehen, dass überprüft wird, ob das Teilstück frei ist, wobei ein Startsignal für das Durchfahren des Teilstücks nur dann aktiviert wird, wenn das Überprüfen ergeben hat, dass das Teilstück frei ist.

Fig. 2 zeigt eine Vorrichtung 201 zum Betreiben eines Parkplatzes.

Die Vorrichtung 201 umfasst einen Prozessor 203, der ausgebildet ist, eine Route zu einer Zielposition innerhalb des Parkplatzes zu ermitteln. Die Vorrichtung 201 umfasst ferner eine Kommunikationsschnittstelle, die ausgebildet ist, die Route über ein Kommunikationsnetzwerk an ein Fahrzeug für eine autonome Fahrt auf dem Parkplatz zu der Zielposition zu senden. Die Vorrichtung 201 umfasst des Weiteren eine Steuerungseinrichtung 207 zum Steuern eines Absperrvorgangs von zumindest einem Teilstück der Route, bevor das Fahrzeug das Teilstück durchfährt, sodass das Fahrzeug autonom durch das gesperrte Teilstück der Route fahren kann.

Die Steuerungseinrichtung 207 ist beispielsweise in Wirkverbindung mit einem oder mehreren Signalgebern und/oder einer oder mehreren Schranken. Das heißt also insbesondere, dass die Steuerungseinrichtung einen Signalgeber oder mehrere Signalgeber steuern kann, sodass die Signalgeber ansprechend auf die Steuerung ein rotes oder grünes Signallicht aussenden. Zum Absperren des Teilstücks sendet der Signalgeber ein rotes Signallicht aus. Zum Freigeben des Teilstücks sendet der Signalgeber ein grünes Signallicht aus. Die Steuerungseinrichtung kann also insbesondere eine Schranke oder mehrere Schranken derart steuern, dass diese ansprechend auf die Steuerung geöffnet oder geschlossen werden. Zum Absperren werden die Schranken geschlossen. Zum Freigeben des Teilstücks werden die Schranken geöffnet.

In Fig. 2 wurde eine Vorrichtung beschrieben, die selbst die Route ermittelt und an das Fahrzeug sendet. In einer nicht gezeigten Ausführungsform ist eine Vorrichtung vorgesehen, die eine ermittelte Route von einem Fahrzeug empfängt und entsprechend der empfangenen Route zumindest ein Teilstück der Route absperrt. Das Fahrzeug ermittelt also selbst die Route.

Fig. 3 zeigt ein Parksystem 301.

Das Parksystem 301 umfasst einen Parkplatz 303 sowie die Vorrichtung 201 der Fig. 2.

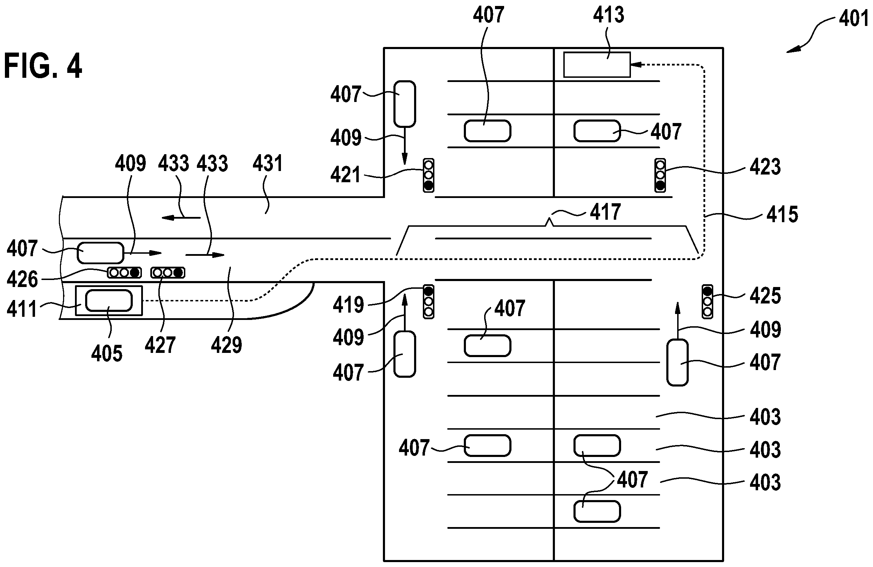

Fig. 4 zeigt einen Parkplatz 401.

Der Parkplatz 401 umfasst mehrere Parkstände 403, auf welchen Fahrzeuge parken können. Der Parkplatz 401 ist beispielsweise als ein Parkhaus oder als eine Garage oder als ein Parkhaus umfassend eine Garage ausgebildet.

Das Bezugszeichen 405 zeigt auf ein AVP-Fahrzeug, also auf ein Fahrzeug, welches autonom auf einem Parkplatz fahren und autonom parken kann. Das Bezugszeichen 407 zeigt auf weitere Fahrzeuge, die sich auf dem Parkplatz befinden. Bei den weiteren Fahrzeugen 407 kann es sich insbesondere um nicht autonom fahrende Fahrzeuge, also normale Fahrzeuge, handeln. Bei den weiteren Fahrzeugen 407 kann es sich insbesondere ebenfalls um AVP-Fahrzeuge handeln. Das heißt also, dass auf dem Parkplatz 401 ein Mischbetrieb aus AVP- und Nicht-AVP-Fahrzeugen vorliegen kann.

Bei einem solchen Mischbetrieb ist eine Kollisionsgefahr in der Regel hoch. Denn es können Situationen auftreten, die zwischen Menschen einfach mittels Handzeichen geregelt werden können. Doch dies ist in der Regel zwischen einem Menschen und einem autonom fahrenden Fahrzeug, also einem Fahrzeug, in welchem nicht notwendigerweise ein Fahrer sitzt, in der Regel nicht möglich. Auch zwischen zwei autonom fahrenden Fahrzeugen ist eine Regelung einer bestimmten Verkehrssituation über Handzeichen üblicherweise nicht möglich. Eine solche bestimmte Situation kann beispielsweise eine Vorfahrt betreffen, also eine Situation, in welcher nicht unbedingt klar ist, welches Fahrzeug nun Vorfahrt hat, das heißt, dass die Fahrzeuge nicht unbedingt wissen, ob sie nun Vorfahrt haben oder nicht.

Doch erfindungsgemäß ist eine Sperrung von zumindest einem Teilstück einer Route zu einer innerhalb des Parkplatzes 401 liegenden Zielposition vorgesehen. Die Zielposition ist hier mit dem Bezugszeichen 413 und ist eine Parkposition. Eine Startposition für die Route ist mit dem Bezugszeichen 411 gekennzeichnet und ist eine Abgabeposition. Das AVP-Fahrzeug 405 ist an der Abgabeposition 411 von seinem Fahrer abgestellt worden.

Es wird nun eine Route von der Abgabeposition 411 zu der Parkposition 413 ermittelt. Diese ermittelte Route ist gestrichelt eingezeichnet und mit dem Bezugszeichen 415 versehen.

Wenn eines der Fahrzeuge 405, 407 mit einem Pfeil 409 versehen ist, so soll dies symbolisch darstellen, dass diese Fahrzeuge nicht parken, sondern vielmehr zum fahrenden Verkehr gehören, auch wenn sie aufgrund einer Absperrung warten müssen.

Ein Teilstück der Route 415 ist symbolisch mit einer geschweiften Klammer mit dem Bezugszeichen 417 gekennzeichnet. Um dieses Teilstück 417 der Route 415 abzusperren, sind fünf Signalgeber 419, 421, 423, 425, 426 vorgesehen, die an entsprechenden Einmündungen einer zu diesem Teilstück 417 führenden Fahrstrecke angeordnet sind. Zum Absperren senden diese Signalgeber rotes Signallicht aus. Dies signalisiert den weiteren Fahrzeugen 407, dass sie an der Einmündung warten müssen.

Im Bereich der Abgabeposition 411 ist ebenfalls ein Signalgeber 427 vorgesehen oder angeordnet. Dieser Signalgeber 427 sendet so lange ein rotes Signallicht aus, bis das Teilstück 417 gesperrt ist, also bis die Signalgeber 419, 421, 423, 425 und 426 ein rotes Signallicht aussenden. Vorzugsweise wird noch eine vorbestimmte Zeit nach dem Umschalten der Signalgeber 419, 421, 423, 425, 426 auf ein rotes Signallicht gewartet, bis der Signalgeber 427 auf ein grünes Signallicht geschaltet wird.

In einer weiteren Ausführungsform ist vorgesehen, dass überprüft wird, ob das Teilstück 417 frei ist, bevor der Signalgeber 427 auf das grüne Signallicht geschaltet wird. Das heißt, dass, nur wenn das Teilstück 417 frei ist, der Signalgeber 427 auf das grüne Signallicht schaltet. Das Überprüfen wird insbesondere mittels eines Überwachungssystems durchgeführt, das beispielsweise eine oder mehrere Videokameras umfasst.

Die Bezugszeichen 429 und 431 zeigen symbolisch auf zwei Fahrspuren. Das Bezugszeichen 433 zeigt auf Pfeile, die eine Fahrtrichtung auf den beiden Fahrspuren 429, 431 symbolisch anzeigen.

Die Erfindung umfasst also den Gedanken, ein Verfahren, eine Vorrichtung, ein Parksystem und ein Computerprogramm anzugeben, mittels derer es ermöglicht ist, eine Problematik eines Mischverkehrs oder Mischbetriebs zu verhindern, so dass damit eine Verhinderung von Verkehrsproblemen sowie von bewirkt werden kann. Der erfindungsgemäße Grundgedanke hierbei ist insbesondere, dass für eine Zeit des autonomen Fahrvorgangs des AVP-Fahrzeugs auf dem Parkplatz, also insbesondere von der Abgabestelle (Abgabeposition) zur Parkposition/Parkbucht oder auch umgekehrt der Fahrweg, also die Route, gesperrt, insbesondere von einem Parkplatzmanagement gesperrt, wird. Das heißt also insbesondere, dass dadurch bewirkt wird, dass für diese Zeit der Mischbetrieb auf dem abgesperrten Teilstück verboten oder verhindert wird.

Das heißt, wenn ein AVP-Fahrzeug selbstständig auf die Zielposition fahren und einparken soll, wird der Fahrweg über Ampel und/oder Schranken für andere Fahrzeuge gesperrt. Andere Fahrzeuge sind in diesem Fall manuell gefahrene Fahrzeuge und/oder andere AVP-Fahrzeuge. Das AVP-Fahrzeug bekommt das Startsignal vorzugsweise erst, wenn die Strecke frei ist.

Vorzugsweise wird dabei so wenig wie möglich Fahrweg gesperrt. Das heißt, nur der Weg, den das AVP-Fahrzeug nehmen wird, gesperrt wird. Vorzugsweise auch nur Teilstücke. Zum Beispiel: Wenn das AVP-Fahrzeug in die 3. Etage eines Parkhauses fahren soll, wird zum Beispiel nur das Erdgeschoss für die Zeit abgesperrt, in welcher sich das AVP-Fahrzeug noch im Erdgeschoss befindet. Die 1., 2. und 3. Etage werden noch nicht abgesperrt und bleiben somit noch für andere Fahrzeuge frei.

In einer weiteren Ausbaustufe (Ausführungsform) wird der Weg zusätzlich für Menschen gesperrt.

Des Weiteren ist es nach einer Ausführungsform vorteilhaft, dass das Parkplatzmanagementsystem den Vorgang und den Fahrweg des AVP-Fahrzeugs überwacht und vorzugsweise gegebenenfalls bei Problemen eingreift: Zum Beispiel das AVP-Fahrzeug stoppt.

Des Weiteren ist es nach einer Ausführungsform vorteilhaft, dass das Parkplatzmanagementsystem den gesamten Vorgang zu Beweiszwecken visuell dokumentiert.

## Patentansprüche

1. Verfahren zum automatischen Betreiben eines Parkplatzes (303, 401),
- wobei eine Route (415) zu einer Zielposition (413) innerhalb des Parkplatzes (303, 401) für eine autonome Fahrt eines Fahrzeugs (405) auf dem Parkplatz (303, 401) zu der Zielposition (413) ermittelt (101) wird und
- wobei zumindest ein Teilstück (417) der Route (415) für alle weiteren Fahrzeuge (407), also auch für nicht autonom fahrende Fahrzeuge, gesperrt (105) wird, bevor das Fahrzeug (405) das Teilstück (417) durchfährt, so dass das Fahrzeug (405) autonom durch das gesperrte Teilstück (417) der Route (415) fahren kann.

2. Verfahren nach Anspruch 1, wobei das Absperren ein Steuern eines oder mehrerer Signalgeber (419, 421, 423, 425, 426) und/oder ein Steuern einer Schranke umfasst.

3. Verfahren nach Anspruch 1 oder 2, wobei überprüft wird, ob das Teilstück (417) frei ist, wobei ein Startsignal für das Durchfahren des Teilstücks (417) nur dann aktiviert wird, wenn das Überprüfen ergeben hat, dass das Teilstück (417) frei ist.

4. Verfahren nach einem der vorherigen Ansprüche, wobei das Teilstück (417) für Menschen gesperrt wird.

5. Verfahren nach einem der vorherigen Ansprüche, wobei die autonome Fahrt des Fahrzeugs (405) auf dem Parkplatz (303, 401) mittels eines Überwachungssystems überwacht wird.

6. Verfahren nach Anspruch 5, wobei das autonom fahrende Fahrzeug (405) und/oder ein weiteres autonom fahrendes Fahrzeug gestoppt wird, wenn während der Überwachung ein für die autonome Fahrt relevantes Problem detektiert wird.

7. Verfahren nach einem der vorherigen Ansprüche, wobei die autonome Fahrt des Fahrzeugs (405) auf dem Parkplatz (303, 401) optisch aufgezeichnet wird.

8. Verfahren nach einem der vorherigen Ansprüche, wobei die Route (415) über ein Kommunikationsnetzwerk an das Fahrzeug (405) für eine autonome Fahrt auf dem Parkplatz (303, 401) zu der Zielposition (413) übermittelt (103) wird oder wobei die Route (415) fahrzeugintern im Fahrzeug (405) ermittelt wird und über ein Kommunikationsnetzwerk an einen Teilnehmer des Kommunikationsnetzwerks übermittelt wird.

9. Vorrichtung (201) zum Betreiben eines Parkplatzes (303, 401), umfassend:
- eine Steuerungseinrichtung (207) zum Steuern eines Absperrvorgangs von zumindest einem Teilstück einer ermittelten Route (415) zu einer Zielposition (413) innerhalb des Parkplatzes (303, 401) für ein autonom fahrendes Fahrzeug (405), bevor das Fahrzeug (405) das Teilstück (417) durchfährt, so dass das Teilstück für alle weiteren Fahrzeuge (407), also auch für nicht autonom fahrende Fahrzeuge, gesperrt wird, und das Fahrzeug (405) autonom durch das gesperrte Teilstück der Route (415) fahren kann.

10. Vorrichtung (201) nach Anspruch 9, umfassend ferner:
- einen Prozessor (203), der ausgebildet ist, die Route (415) zu der Zielposition (413) innerhalb des Parkplatzes (303, 401) zu ermitteln, und
- eine Kommunikationsschnittstelle (205), die ausgebildet ist, die Route (415) über ein Kommunikationsnetzwerk an das Fahrzeug (405) für eine autonome Fahrt auf dem Parkplatz (303, 401) zu der Zielposition (413) zu senden.

11. Vorrichtung (201) nach Anspruch 9 oder 10, umfassend ferner eine Kommunikationsschnittstelle (205), die ausgebildet ist, die ermittelte Route (415) über das Kommunikationsnetzwerk zu empfangen.

12. Parksystem (301), umfassend einen Parkplatz (303, 401) und die Vorrichtung (201) nach einem der Ansprüche 9 bis 11.

13. Computerprogramm, umfassend Programmcode zur Durchführung des Verfahrens nach einem der Ansprüche 1 bis 8, wenn das Computerprogramm auf einem Computer ausgeführt wird.

## Claims

1. Method for automatically operating a car park (303, 401),
- wherein a route (415) to a target position (413) within the car park (303, 401) is determined (101) for autonomous travel of a vehicle (405) in the car park (303, 401) to the target position (413), and
- wherein at least part (417) of the route (415) is blocked (105) to all further vehicles (407), that is to say also to non-autonomously driving vehicles, before the vehicle (405) drives through the part (417), so that the vehicle (405) can drive autonomously through the blocked part (417) of the route (415).

2. Method according to Claim 1, wherein the blocking comprises controlling one or more signal encoders (419, 421, 423, 425, 426) and/or controlling a barrier.

3. Method according to Claim 1 or 2, wherein it is checked whether the part (417) if free, wherein a starting signal for travelling through the part (417) is activated only when the checking has revealed that the part (417) is free.

4. Method according to one of the preceding claims, wherein the part (417) is blocked to people.

5. Method according to one of the preceding claims, wherein the autonomous travel of the vehicle (405) in the car park (303, 401) is monitored by means of a monitoring system.

6. Method according to Claim 5, wherein the autonomously driving vehicle (405) and/or a further autonomously driving vehicle is stopped if a problem which is relevant to the autonomous travel is detected during the monitoring.

7. Method according to one of the preceding claims, wherein the autonomous travel of the vehicle (405) in the car park (303, 401) is recorded visually.

8. Method according to one of the preceding claims, wherein the route (415) is transferred (103) via a communication network to the vehicle (405) for autonomous travel in the car park (303, 401) to the target position (413) or wherein the route (415) is determined vehicle-internally in the vehicle (405) and is transferred via a communication network to a subscriber of the communication network.

9. Device (201) for operating a car park (303, 401), comprising:
- a control device (207) for controlling a blocking process of at least one part of a determined route (415) to a target position (413) within the car park (303, 401) for an autonomously driving vehicle (405), before the vehicle (405) drives through the part (417), so that the part is blocked to all further vehicles (407), that is to say also to non-autonomously driving vehicles, and the vehicle (405) can drive autonomously through the blocked part of the route (415).

10. Device (201) according to Claim 9, also comprising:
- a processor (203) which is designed to determine the route (415) to the target position (413) within the car park (303, 401), and
- a communication interface (205) which is designed to transmit the route (415) via a communication network to the vehicle (405) for autonomous travel in the car park (303, 401) to the target position (413).

11. Device (201) according to Claim 9 or 10, also comprising a communication interface (205) which is designed to receive the determined route (415) via the communication network.

12. Parking system (301), comprising a car park (303, 401) and the device (201) according to one of Claims 9 to 11.

13. Computer program, comprising program code for carrying out the method according to one of Claims 1 to 8 when the computer program is run on a computer.

## Revendications

1. Procédé d'exploitation automatique d'une aire de stationnement (303, 401),
- dans lequel un trajet (415) jusqu'à une position de destination (413) à l'intérieur de l'aire de stationnement (303, 401) est établi (101) pour un déplacement autonome d'un véhicule (405) sur l'aire de stationnement (303, 401) jusqu'à la position de destination (413), et
- dans lequel au moins un tronçon (417) du trajet (415) est bloqué (105) pour tous les autres véhicules (407), donc aussi pour des véhicules ne circulant pas de façon autonome, avant que le véhicule (405) ne passe par le tronçon (417) de sorte que le véhicule (405) peut passer de façon autonome par le tronçon bloqué (417) du trajet (415).

2. Procédé selon la revendication 1, dans lequel le blocage comprend une commande d'un ou de plusieurs émetteurs de signaux (419, 421, 423, 425, 426) et/ou une commande d'une barrière.

3. Procédé selon la revendication 1 ou 2, dans lequel on vérifie si le tronçon (417) est libre, un signal de départ pour le passage du tronçon (417) n'étant activé que si la vérification a montré que le tronçon (417) est libre.

4. Procédé selon l'une quelconque des revendications précédentes, dans lequel le tronçon (417) est bloqué pour les personnes.

5. Procédé selon l'une quelconque des revendications précédentes, dans lequel le déplacement autonome du véhicule (405) sur l'aire de stationnement (303, 401) est surveillé au moyen d'un système de surveillance.

6. Procédé selon la revendication 5, dans lequel le véhicule (405) circulant de façon autonome et/ou un autre véhicule circulant de façon autonome sont arrêtés si un problème concernant le déplacement autonome est détecté pendant la surveillance.

7. Procédé selon l'une quelconque des revendications précédentes, dans lequel le déplacement autonome du véhicule (405) sur l'aire de stationnement (303, 401) est enregistré de manière optique.

8. Procédé selon l'une quelconque des revendications précédentes, dans lequel le trajet (415) est transmis (103) au véhicule (405) par un réseau de communication pour un déplacement autonome sur l'aire de stationnement (303, 401) jusqu'à la position de destination (413), ou dans lequel le trajet (415) est établi à bord du véhicule (405) et est transmis par un réseau de communication à un abonné du réseau de communication.

9. Dispositif (201) d'exploitation d'une aire de stationnement (303, 401), comprenant :
- un dispositif de commande (207) pour commander une opération de blocage d'au moins un tronçon d'un trajet établi (415) jusqu'à une position de destination (413) à l'intérieur de l'aire de stationnement (303, 401) pour un véhicule (405) circulant de façon autonome avant que le véhicule (405) ne passe par le tronçon (417) de sorte que le tronçon est bloqué pour tous les autres véhicules (407), donc aussi pour des véhicules ne circulant pas de façon autonome, et le véhicule (405) peut passer de façon autonome par le tronçon du trajet (415) bloqué.

10. Dispositif (201) selon la revendication 9, comprenant en outre :
- un processeur (203) qui est réalisé pour établir le trajet (415) jusqu'à la position de destination (413) à l'intérieur de l'aire de stationnement (303, 401), et
- une interface de communication (205) qui est réalisée pour envoyer le trajet (415) au véhicule (405) par un réseau de communication pour un déplacement autonome sur l'aire de stationnement (303, 401) jusqu'à la position de destination (413).

11. Dispositif (201) selon la revendication 9 ou 10, comprenant en outre une interface de communication (205) qui est réalisée pour recevoir le trajet établi (415) par le réseau de communication.

12. Système de stationnement (301), comprenant une aire de stationnement (303, 401) et le dispositif (201) selon l'une quelconque des revendications 9 à 11.

13. Programme informatique, comprenant du code de programme pour effectuer le procédé selon l'une quelconque des revendications 1 à 8 si le programme informatique est exécuté sur un ordinateur.
